# EUROPÄISCHE PATENTANMELDUNG

(11) **EP 2 605 481 A1**
(43) Veröffentlichungstag der Anmeldung: **19.06.2013**
(21) Anmeldenummer: 12158419.7
(22) Anmeldetag: 07.03.2012
(51) Int. Cl.: H04L 29/08

(54) **Verfahren und Vorrichtung zum Filtern von Netzwerkverkehr**

(30) Priorität: 13.12.2011 EP 11193303
(71) Anmelder: Siemens Aktiengesellschaft, 80333 München (DE)
(72) Erfinder: Kuntschke, Richard, 84144 Geisenhausen (DE); Käbisch, Sebastian, 80997 München (DE)

(57) **Zusammenfassung**

Die Erfindung bezieht sich auf ein Verfahren zum Filtern von Netzwerkdaten in einem Netzwerkknoten, mit den Schritten des Erzeugens von Filtermarkierungen in einer Grammatikstruktur von mit einem Codierungsschema codierter Netzwerkdaten auf der Basis einstellbarer Filteranfragen mindestens eines weiteren Netzwerkknotens, des Erzeugens einer Filtermaske auf der Basis der Filtermarkierungen, des Empfangens eines mit dem Codierungsschema codierten Datenstroms in dem Netzwerkknoten, des Filterns des Datenstroms mithilfe der Filtermaske, und des Weiterleitens des gefilterten codierten Datenstroms an den mindestens einen weiteren Netzwerkknoten.

## Beschreibung

Die vorliegende Erfindung bezieht sich auf ein Verfahren und eine Vorrichtung zum Filtern von Netzwerkverkehr, insbesondere für das Filtern von codierten XML-Datenströmen in ressourcenbegrenzten Netzwerkknoten.

### Stand der Technik

Drahtlose oder drahtgebundene Sensornetzwerke werden heutzutage an das Internet angebunden, um eine Steuerung der Sensoren des Sensornetzwerks über das Internet von überall auf der Welt zu ermöglichen. Um Netzwerkknoten eines Sensornetzwerks untereinander oder an andere Netzwerk, wie beispielsweise an das Internet anzubinden, werden entsprechende Schnittstellen benötigt, um Steuerbefehle, Datenpakete und/oder Nachrichten zu übertragen.

Netzwerke setzen mehr und mehr auf universelle Datenübermittlungsprotokolle, die in standardisierter Form existieren und in allen Netzwerken interpretiert werden können. Da insbesondere verstärkt Webservices eingesetzt werden, die zur Kommunikation häufig vereinheitlichte Netzwerkprotokolle, wie beispielsweise SOAP verwenden, ist es vorteilhaft, mit diesen Netzwerkprotokollen kompatible Kommunikationsprotokolle einzusetzen. SOAP ist ein Protokoll zum Austausch von Nachrichten über ein Computernetzwerk und stellt Regeln für das Nachrichtendesign auf. Insbesondere regelt es, wie Daten in der Nachricht abzubilden und zu interpretieren sind. SOAP basiert auf einer einheitlichen strukturierten Auszeichnungssprache wie XML (Extensible Markup Language).

Die Verbosität und Datenfülle solcher Netzwerkprotokolle ist zwar für rechenstarke Systeme wie PCs, Laptops oder Mobiltelefone problemlos zu handhaben, für eingebettete Geräte bzw. Systeme ("embedded devices") wie beispielsweise Mikrocontroller, die häufig in Sensornetzwerken eingesetzt werden, ist diese Datenmenge jedoch nur unter erheblichen Laufzeitverlusten und mit großem Speicherbedarf zu bewältigen. Diese Speicherkapazitäten sind in eingebetteten Geräten sehr häufig nicht zu realisieren.

Daher wird für den Einsatz in Netzwerken mit eingebetteten Geräten oft auf Codierungsprotokolle wie beispielsweise EXI ("Efficient XML Interchange", W3C-Standard) oder BiM ("Binary MPEG format for XML", standardisiert nach ISO/IEC 23001-1) zurückgegriffen, mit Hilfe derer Daten von verbosen Netzwerkprotokollen wie XML in komprimierter Form codiert werden können. EXI und BiM sind Binärcodierungsschemata textbasierter XML-Dokumente.

### Zusammenfassung der Erfindung

Die vorliegende Erfindung schafft gemäß einem Aspekt ein Verfahren zum Filtern von Netzwerkdaten, in einem Netzwerkknoten, mit den Schritten des Erzeugens von Filtermarkierungen in einer Grammatikstruktur von mit einem Codierungsschema codierter Netzwerkdaten auf der Basis einstellbarer Filteranfragen mindestens eines weiteren Netzwerkknotens, des Erzeugens einer Filtermaske auf der Basis der Filtermarkierungen, des Empfangens eines mit dem Codierungsschema codierten Datenstroms in dem Netzwerkknoten, des Filterns des Datenstroms mithilfe der Filtermaske, und des Weiterleitens des gefilterten codierten Datenstroms an den mindestens einen weiteren Netzwerkknoten.

Gemäß einem weiteren Aspekt schafft die vorliegende Erfindung eine Vorrichtung zum Filtern von Netzwerkdaten, in einem Netzwerkknoten, mit einer Konfigurationseinrichtung, welche dazu ausgelegt ist, von mindestens einem weiteren Netzwerkknoten einstellbare Filteranfragen zu empfangen, einer Markierungseinrichtung, welche dazu ausgelegt ist, Filtermarkierungen in einer Grammatikstruktur von mit einem Codierungsschema codierter Netzwerkdaten auf der Basis der einstellbaren Filteranfragen zu erzeugen, einer Maskeneinrichtung, welche dazu ausgelegt ist, eine Filtermaske auf der Basis der Filtermarkierungen zu erzeugen, und einer Filtereinrichtung, welche dazu ausgelegt ist, einen von dem Netzwerkknoten empfangenen, mit dem Codierungsschema codierten Datenstrom mithilfe der Filtermaske zu filtern und den gefilterten codierten Datenstrom an den mindestens einen weiteren Netzwerkknoten weiterzuleiten. Die Vorrichtung kann beispielsweise ein Mikroprozessor eines eingebetteten Systems sein.

Gemäß einem weiteren Aspekt schafft die vorliegende Erfindung einen Netzwerkknoten mit einer erfindungsgemäßen Vorrichtung, einer Empfangsschnittstelle, welche dazu ausgelegt ist, einen mit dem Codierungsschema codierten Datenstrom zu empfangen und durch die Filtereinrichtung zu leiten, und einer Sendeschnittstelle, welche dazu ausgelegt ist, den von der Filtereinrichtung gefilterten codierten Datenstrom an mindestens einen weiteren Netzwerkknoten weiterzuleiten Der Netzwerkknoten kann dabei beispielsweise ein eingebettetes System sein.

### Vorteile der Erfindung

Eine Idee der vorliegenden Erfindung ist es, eine Filteranfrage in einem Netzwerkknoten auf codierten Netzwerkdaten auszuführen, ohne dass die Netzwerkdaten decodiert und wieder codiert werden müssen. Dies ermöglicht eine schnelle, effiziente und ressourcensparende Verarbeitung von codierten Netzwerkdaten, insbesondere von Netzwerkdaten, die in nichtcodierter Form gemäß verbosen Kommunikationsprotokollen wie XML vorliegen. Dadurch kann der Netzwerkverkehr erheblich reduziert werden. Zudem ist die Erfindung besonders vorteilhaft auf eingebettete Systeme und Geräte anzuwenden, die Netzwerkdaten empfangen und senden.

Gemäß einer Ausführungsform kann der Datenstrom XML-Format aufweist. Dabei kann das Codierungsschema ein binäres XML-Codierungsschema umfassen. Vorteilhafterweise können die Filteranfragen XPath-Filteranfragen oder XQuery-Filteranfragen aufweisen. Dies ermöglicht die ressourcensparende Verarbeitung von binär codierten XML-Datenströmen in Netzwerkknoten mit geringem Speichervermögen wie beispielsweise in eingebetteten System oder Sensornetzwerkknoten.

Weiterbildungen und Variationen sind in den abhängigen Ansprüchen angegeben.

Weitere Merkmale und Vorteile der Erfindung ergeben sich aus der nachfolgenden Beschreibung von Ausführungsbeispielen anhand der Figuren.

### Kurze Beschreibung der Zeichnungen

Es zeigen:
- Fig. 1: eine schematische Darstellung eines Netzwerks mit einer Vielzahl von Netzwerkknoten gemäß einer Ausführungsform der Erfindung;
- Fig. 2: eine schematische Darstellung einer beispielhaften Grammatikstruktur für codierte Netzwerkdaten gemäß einer weiteren Ausführungsform der Erfindung;
- Fig. 3: eine schematische Darstellung der Grammatikstruktur für codierte Netzwerkdaten in Fig. 2 mit Filtermarkierungen gemäß einer weiteren Ausführungsform der Erfindung;
- Fig. 4: eine schematische Darstellung einer Filtergrammatikstruktur für codierte Netzwerkdaten gemäß einer weiteren Ausführungsform der Erfindung;
- Fig. 5: eine schematische Darstellung einer Filtergrammatikstruktur für codierte Netzwerkdaten gemäß einer weiteren Ausführungsform der Erfindung; und
- Fig. 6: eine schematische Darstellung eines Netzwerkknotens gemäß einer weiteren Ausführungsform der Erfindung;
- Fig. 7: eine schematische Darstellung eines Verfahrens zum Filtern von Netzwerkverkehr gemäß einer weiteren Ausführungsform der Erfindung.

Gleichartige und/oder gleich wirkende Elemente in den Figuren sind mit gleichen Bezugszeichen versehen. Es versteht sich, dass die angegebenen Darstellungen nicht notwendigerweise maßstabsgetreu angegeben sind. Weiterhin ist es selbstverständlich, dass einzelne Merkmale und/oder Konzepte verschiedener in den Zeichnungen dargestellter Ausführungsformen miteinander beliebig - soweit sinnvoll - kombiniert werden können.

### Ausführliche Beschreibung der Erfindung

Codierungsschemata im Sinne der vorliegenden Erfindung umfassen alle Protokolle, die geeignet sind, Netzwerkdaten, insbesondere XML-Daten, in eine eineindeutig decodierbare komprimierte Form zu codieren. Codierungsschemata können dabei beispielsweise EXI ("Efficient XML Interchange"), BiM ("Binary MPEG format for XML"), WBXML ("Wireless Binary XML"), EBML ("Extensible Binary Meta Language"), FastInfoset, ASN.1, XGrind oder XQueC umfassen.

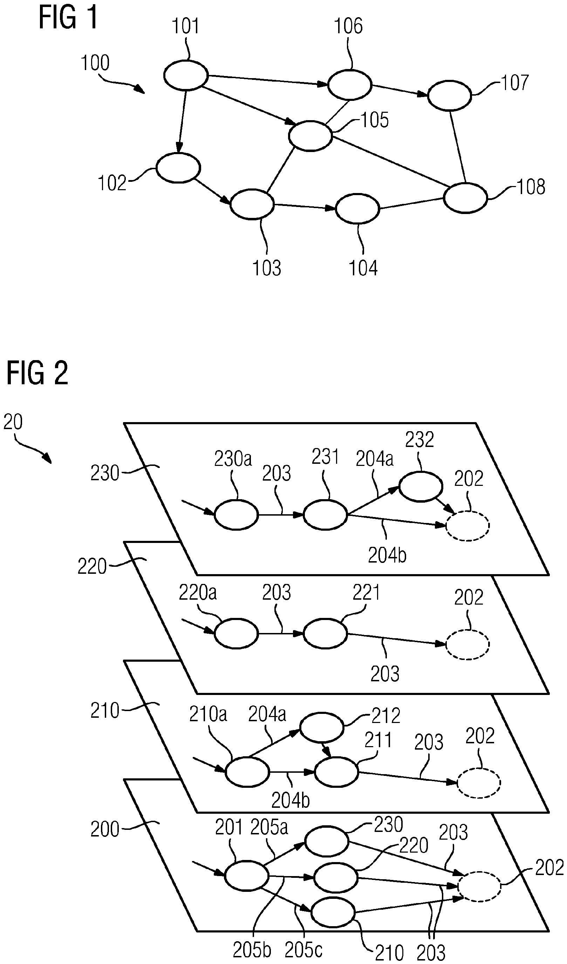

Fig. 1 zeigt eine schematische Darstellung eines Netzwerks 100 mit einer Vielzahl von Netzwerkknoten 101 bis 108, die untereinander über Netzwerkverbindungen gekoppelt sind. Das Netzwerk 100 kann beispielsweise ein Sensornetzwerk sein, welches eingebettete Systeme untereinander vernetzt. In so einem Sensornetzwerk können beispielsweise Sensordaten im XML-Format zwischen den Netzwerkknoten ausgetauscht werden. Beispielsweise können die Netzwerkknoten 104, 105 und 107 Abonnenten von Netzwerkdaten, sein, die im Netzwerkknoten 101 generiert oder empfangen werden. Um eine effiziente Verarbeitung von Netzwerkdaten in dem Netzwerk 100 zu ermöglichen, ist es vorteilhaft, dass der Netzwerkknoten 101 bereits eine Selektion bzw. Filterung der in das Netzwerk 100 an die Netzwerkknoten 104, 105 und 107 zu verteilenden Netzwerkdaten vornimmt.

Die Netzwerkdaten können beispielsweise in binär codierter Form im Netzwerk 100 versendet werden. Fig. 2 zeigt eine schematische Darstellung einer beispielhaften Grammatikstruktur 20 für codierte Netzwerkdaten, die im Netzwerk 100 versendet werden können. Beispielhaft wird im Folgenden auf EXI als Codierungsschema Bezug genommen, wobei jedoch jedes andere Codierungsschema, insbesondere für XML-Daten, ebenso geeignet ist.

Auf einer Wurzelebene 200 umfasst die Grammatikstruktur 20 einen Einstiegsknoten 201, der über 2-Bit-Übergänge 205, 205b und 205c auf drei Unterzustände 210, 220 bzw. 230 verweist. Für jeden der Unterzustände 210, 220, 230 weist die Grammatikstruktur eine untergeordnete Hierarchieebene auf, in der die jeweiligen deterministischen finiten Automata einen komplexen Typ in einem XML-Schema wiedergeben. Beispielsweise kann der Unterzustand 210 ein Automaton darstellen, welcher einen komplexen Typ "A" codiert.

Der Einstiegsknoten 210a des Unterzustands 210 führt über 1-Bit-Übergänge 204a, 204b auf zwei Subzustände 211, 212 des Unterzustands 210, die wiederum Subtypen des durch den Unterzustand 210 codierten Typs sind. Beispielsweise kann der Subzustand 211 den komplexen Subtyp "d" codieren, während der Subzustand 212 den komplexen Subtyp "e" codieren kann. Im Beispiel der Fig. 2 führt der Subzustand 212 wieder auf den Subzustand 211 zurück, von dem aus ein Nullübergang 203 auf den Ausstiegsknoten 202 des Unterzustands 210 verweist.

In analoger Weise sind die Unterzustände 220 und 230 - zum Beispiel Typ "B" und Typ "C" - codiert, die jeweils Einstiegsknoten 220a bzw. 230a und Subzustände 221 (Subtyp "f"), 231 (Subtyp "g") und 232 (Subtyp "h") aufweisen. Diese sind jeweils über 1-Bit-Übergänge 204a, 204b oder Nullübergänge 203 miteinander verknüpft und führen jeweils zu dem Ausstiegsknoten 202 des jeweiligen Unterzustands 220 bzw. 230 zurück.

Ein beispielhafter EXI-Datenstrom E1 für den Unterzustand 210 könnte daher E1 = 00 1 "e" "d" lauten, wobei der Unterzustand 210 durch den 2-Bit-Operator "00", der 1-Bit-Übergang innerhalb des Unterzustands 210 durch den 1-Bit-Operator 1 und die zwei im Unterzustand 210 verfügbaren Subzustände 211 und 212 durch die jeweiligen Inhalte "d" bzw. "e" wiedergegeben werden. Es sei dazu bemerkt, dass vor dem Subzustand 211 der 1-Bit-Operator 0 aus Kompressionsgründen weggelassen werden kann.

Auf die derart aufgebauten EXI-Datenströmen können Filteranfragen aufgesetzt werden, die beispielsweise im XPath-Format oder XQuery-Format vorliegen können. XPath ist eine im W3C standardisierte Abfragesyntax, mithilfe derer Typen oder Subtypen von Daten im XML-Format adressiert werden können. Basierend auf diesen Filteranfragen kann die Grammatikstruktur 20 in eine markierte Grammatikstruktur überführt werden, in der die jeweils für die Filteranfrage relevanten Typen und Subtypen markiert sind.

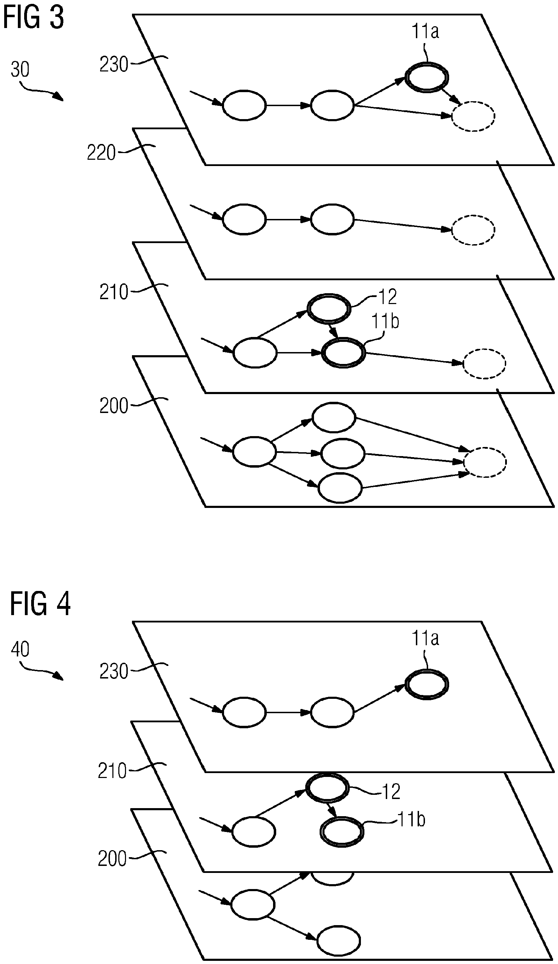

Fig. 3 zeigt eine schematische Darstellung der Grammatikstruktur 20 für codierte Netzwerkdaten aus Fig. 2 mit entsprechenden Filtermarkierungen. Diese markierte Grammatikstruktur 30 ist beispielhaft für eine Filteranfrage nach dem XPath-Format mit den Abfrageparametern "/C/h", "/A[e]/d" und "//h" gezeigt. Der Abfrageparameter "/C/h" filtert alle Typen "C", die einen Subtyp "h" aufweisen, der Abfrageparameter "//h" alle Subtypen "h", egal in welchem Typ, und der Abfrageparameter "/A[e]/d" schließlich alle Subtypen "d", die in einem Typ "A" enthalten sind, vorausgesetzt der Typ "A" umfasst auch einen Subtyp "e".

Auf diese Weise enthält die markierte Grammatikstruktur 30 Filtermarkierungen 11, die anfragegemäße Unterzustände bzw. Subzustände kennzeichnen. Die Filtermarkierungen 12 kennzeichnen hingegen Unterzustände bzw. Subzustände, die als konditionale Unterzustände bzw. Subzustände für eine der Filteranfragen dienen.

Wie in Fig. 4 für die markierte Grammatikstruktur 30 aus Fig. 3 beispielhaft gezeigt ist, kann aus der markierten Grammatikstruktur 30 eine Filtermaske 40 generiert werden, in der lediglich die Unterzustände bzw. Subzustände, die durch eine der Filtermarkierungen 11a, 11b bzw. 12 gekennzeichnet sind, enthalten sind. Diese Filtermaske 40 kann nun auf die eingehenden Datenströme in einem Netzwerkknoten angewandt werden. Dazu ist lediglich die Kenntnis der Grammatikstruktur 20 der Datenströme notwendig. Für alle mit einem vorgegebenen Codierungsschema, beispielsweise EXI, codierten XML-Daten können mithilfe der Filtermaske 40 Netzwerkdaten gefiltert werden, ohne dass eine Decodierung in XML-Format nötig ist.

Die Erzeugung der Filtermaske 40, wie in Fig. 4 gezeigt, kann dabei auch außerhalb des Netzwerkknotens erfolgen, da die Erzeugung der Filtergrammatik und die tatsächliche Filterung logisch getrennte Prozesse betreffen, die nicht notwendigerweise in einen gemeinsamen Prozessablauf eingebettet werden müssen. Insbesondere kann eine zentrale Stelle in dem Netzwerk 100 für die Erzeugung der Filtermasken 40 vorgesehen sein, die dann an die jeweiligen Netzwerkknoten 101 bis 108 verteilt werden können, um die Filterung von Netzwerkverkehr mithilfe der Filtermaske 40 vorzunehmen.

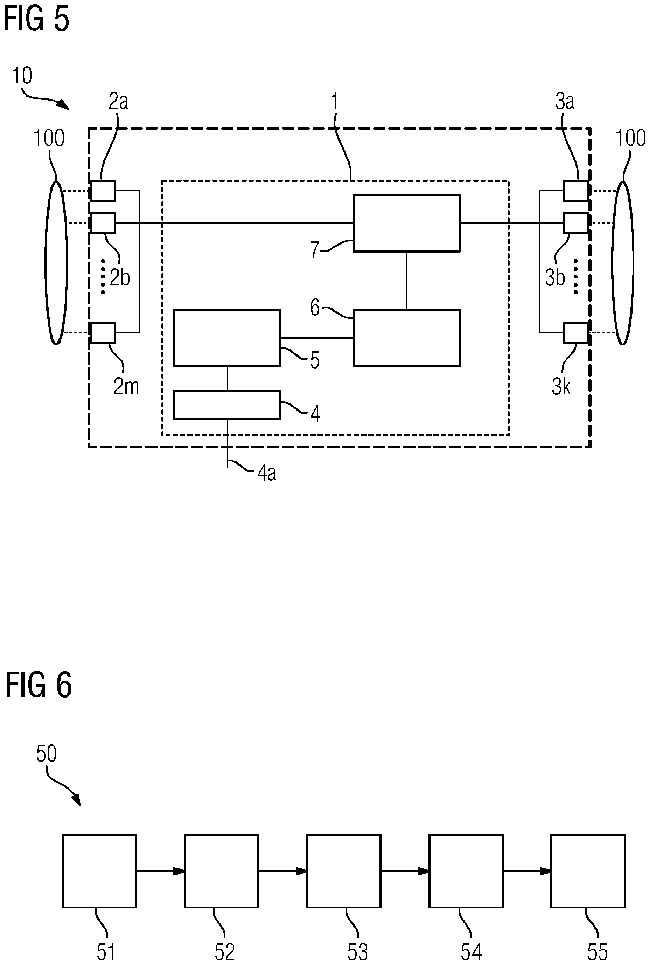

Fig. 5 zeigt eine schematische Darstellung eines Netzwerkknotens 10 mit einer Vorrichtung 1 zum Filtern von Netzwerkdaten. Der Netzwerkknoten 10 kann dabei beispielsweise in einem Netzwerk 100 wie in Fig. 1 gezeigt eingebunden sein. Beispielsweise können einer oder mehrere der dort gezeigten Netzwerkknoten 101 bis 108 den in Fig. 5 gezeigten Aufbau des Netzwerkknotens 10 aufweisen.

Der Netzwerkknoten 10 umfasst eine Empfangsschnittstelle mit Empfangsports 2a, 2b, 2m, an welchen Netzwerkverkehr aus dem Netzwerk 100 empfangen werden kann. Die Empfangsschnittstelle kann dazu ausgelegt sein, einen mit einem Codierungsschema codierten Datenstrom zu empfangen und durch eine Filtereinrichtung 7 zu leiten. Der codierte Datenstrom kann dabei beispielsweise binäres XML-Format aufweisen, zum Beispiel EXI- oder BiM-Daten. Der Netzwerkknoten 10 umfasst weiterhin eine Sendeschnittstelle mit Sendeports 3a, 3b, 3k, welche dazu ausgelegt ist, den von der Filtereinrichtung 7 gefilterten codierten Datenstrom an das Netzwerk 100, und insbesondere mindestens einen weiteren Netzwerkknoten 101 bis 108 weiterzuleiten. Dabei kann das Senden des gefilterten codierten Datenstroms an diejenigen Netzwerkknoten erfolgen, die entsprechende Filteranfragen 4a an den Netzwerkknoten 10 gerichtet haben.

Der Netzwerkknoten 10 kann beispielsweise ein eingebettetes System mit einem ARM-Mikroprozessor als Vorrichtung 1 aufweisen. Derartige Mikroprozessoren können in einem Mikrocontroller ausgestaltet sein und über etliche kB an wiederbeschreibbarem Speicher (RAM-Speicher) und etliche kB an Flash-Speicher verfügen. Der Netzwerkknoten 10 kann ferner über ein Betriebssystem des Mikrocontrollers betrieben werden, beispielsweise ContikiOS oder Java Micro Edition CLDC. Die Kommunikation über die Schnittstellen des Netzwerkknotens 10 kann zum Beispiel über IPv6 over Low Power Wireless Personal Area Networks (6LoWPAN) abgewickelt werden.

Die Vorrichtung 1 umfasst eine Konfigurationseinrichtung 4, eine mit der Konfigurationseinrichtung 4 gekoppelte Markierungseinrichtung 5, eine mit der Markierungseinrichtung 5 gekoppelte Maskeneinrichtung 6, und die mit der Maskeneinrichtung 6 gekoppelte Filtereinrichtung 7. Die Filtereinrichtung 7 ist dabei zwischen die Empfangsschnittstelle und die Sendeschnittstelle des Netzwerkknotens 10 geschaltet, um den gefilterten codierten Datenstrom an das Netzwerk 100 weiterzuleiten.

Die Konfigurationseinrichtung 4, ist dazu ausgelegt, von mindestens einem weiteren Netzwerkknoten einstellbare Filteranfragen 4a zu empfangen. Diese Filteranfragen 4a können beispielsweise XPath-Filteranfragen oder XQuery-Filteranfragen umfassen und Informationen enthalten, die angeben, welche Art von Daten der jeweils anfragende Netzwerkknoten weitergeleitet bzw. nicht weitergeleitet bekommen möchte. Beispielsweise kann der Netzwerkknoten 10 ein Sensornetzwerkknoten sein, welcher Sensordaten empfängt bzw. generiert. Andere Netzwerkknoten können daran interessiert sein, diese Sensordaten zu empfangen, wenn bestimmte Sensorparameter innerhalb vordefinierter Bereiche liegen. Zum Beispiel kann ein Netzwerkknoten nur dann Sensordaten eines Temperatursensors empfangen wollen, wenn ein kritischer Temperaturwert überschritten ist. In diesem Fall kann eine Filteranfrage 4a gestellt werden, die die Netzwerkdaten nach Sensordaten filtert, bei denen ein Dateneintrag für Temperaturdaten den kritischen Temperaturwert überschreitet.

Die Markierungseinrichtung 5 empfängt die Filteranfragen 4a der Konfigurationseinrichtung 4, und ist dazu ausgelegt, Filtermarkierungen 11, 12 in einer Grammatikstruktur 20 von mit einem Codierungsschema codierter Netzwerkdaten auf der Basis der Filteranfragen 4a zu erzeugen, beispielsweise wie im Zusammenhang mit den Fig. 2 und 3 erläutert. Die Grammatikstruktur 20 aller möglicher in dem Netzwerkknoten 10 auflaufenden Daten ist dabei in der Markierungseinrichtung 5 hinterlegt. Sollte sich das Datenformat der eingehenden Datenströme ändern, beispielsweise weil Datenfelder im XML-Format geändert, hinzugefügt oder gelöscht werden, kann die Grammatikstruktur 20 in der Markierungseinrichtung 5 entsprechend aktualisiert werden. Die Maskeneinrichtung 6 ist dann dazu ausgelegt, eine Filtermaske 40 auf der Basis der Filtermarkierungen 11, 12 zu erzeugen, beispielsweise wie im Zusammenhang mit Fig. 4 erläutert.

Die derart erzeugte Filtermaske 40 dient dann der Filtereinrichtung 7 zum Filtern des mit dem Codierungsschema codierten Datenstroms, der von der Empfangsschnittstelle des Netzwerkknotens 10 durch die Filtereinrichtung 7 durchgeleitet wird. Die Filtereinrichtung 7 kann dabei selektiv Netzwerkdaten an bestimmte Netzwerkknoten weiterleiten, je nachdem, ob deren Filteranfragen 4a, auf denen die jeweilige Filtermaske 40 basiert, auf die jeweiligen Netzwerkdaten zutreffen oder nicht. Die Netzwerkdaten, die die Filtermaske 40 nicht passieren, können durch die Filtereinrichtung 7 verworfen werden.

Fig. 6 zeigt eine schematische Darstellung eines Verfahrens 50 zum Filtern von Netzwerkverkehr. Das Verfahren 50 kann beispielsweise in dem in Fig. 1 gezeigten Netzwerk 100 und insbesondere zum Betreiben eines Netzwerkknotens 10, wie in Fig. 5 gezeigt, eingesetzt werden.

In einem ersten Schritt 51 erfolgt ein Erzeugen von Filtermarkierungen in einer Grammatikstruktur von mit einem Codierungsschema codierter Netzwerkdaten auf der Basis einstellbarer Filteranfragen mindestens eines weiteren Netzwerkknotens, beispielsweise eines der Netzwerkknoten 101 bis 108 in dem Netzwerk 100 aus Fig. 1. In einem zweiten Schritt 52 erfolgt ein Erzeugen einer Filtermaske auf der Basis der Filtermarkierungen.

Ein Datenstrom, der mit dem Codierungsschema codiert ist, wird in Schritt 53 in dem Netzwerkknoten empfangen. Dieser Datenstrom kann in Schritt 54 mithilfe der Filtermaske gefiltert werden, beispielsweise in der Filtereinrichtung 7 des Netzwerkknotens 10. Nach dem Filtern kann der gefilterte codierte Datenstrom in Schritt 55 an den mindestens einen weiteren Netzwerkknoten weitergeleitet werden.

Die Vorteile bei der Verwendung von binären XML-Formaten als Codierungsschemata sind die hohe Kompressionsrate sowie die damit verbundene Bandbreiteneinsparung bei der Übertragung der codierten Netzwerkdaten und der entsprechend geringe Speicherbedarf in den jeweiligen Netzwerkknoten. Mithilfe des Verfahrens 50 sowie der Vorrichtung 1 in dem Netzwerkknoten 10 können diese Vorteile beibehalten werden, da zu keinem Zeitpunkt der Verarbeitung des codierten Datenstroms in dem Netzwerkknoten 10 eine Decodierung in XML-Format notwendig wird. Stattdessen können die Netzwerkdaten in codierter Form analysiert und gefiltert werden. Dies ist insbesondere für eingebettete Systeme oder andere Netzwerkknoten mit begrenzten Ressourcen wie Speicher oder Rechenkapazität von Vorteil, da ein aufwändiges Decodieren und erneutes Codieren der Netzwerkdaten entfallen kann. Auch für Netzwerkknoten mit begrenzten Energieressourcen, beispielsweise batteriebetriebene Sensoren, ist die erfindungsgemäße Vorgehensweise vorteilhaft, da die Rechenoperationen für das Decodieren und erneute Codieren nicht vorgenommen werden müssen bzw. Speicheroperationen für umfangreiche XML-Daten ausbleiben.

## Patentansprüche

1. Verfahren (50) zum Filtern von Netzwerkdaten in einem Netzwerkknoten (10), mit den Schritten:
Erzeugen (51) von Filtermarkierungen (11, 12) in einer Grammatikstruktur (20) von mit einem Codierungsschema codierter Netzwerkdaten auf der Basis einstellbarer Filteranfragen (4a) mindestens eines weiteren Netzwerkknotens (101; ...; 108);
Erzeugen (52) einer Filtermaske (40) auf der Basis der Filtermarkierungen (11, 12);
Empfangen (53) eines mit dem Codierungsschema codierten Datenstroms in dem Netzwerkknoten (10);
Filtern (54) des Datenstroms mithilfe der Filtermaske (40); und
Weiterleiten (55) des gefilterten codierten Datenstroms an den mindestens einen weiteren Netzwerkknoten (101; ...; 108).

2. Verfahren (50) nach Anspruch 1, wobei der Datenstrom XML-Format aufweist.

3. Verfahren (50) nach Anspruch 2, wobei das Codierungsschema ein binäres XML-Codierungsschema umfasst.

4. Verfahren (50) nach Anspruch 3, wobei die Filteranfragen (4a) XPath-Filteranfragen oder XQuery-Filteranfragen aufweisen.

5. Vorrichtung (1) zum Filtern von Netzwerkdaten in einem Netzwerkknoten (10), mit:
einer Konfigurationseinrichtung (4), welche dazu ausgelegt ist, von mindestens einem weiteren Netzwerkknoten einstellbare Filteranfragen (4a) zu empfangen;
einer Markierungseinrichtung (5), welche dazu ausgelegt ist, Filtermarkierungen (11, 12) in einer Grammatikstruktur (20) von mit einem Codierungsschema codierter Netzwerkdaten auf der Basis der einstellbaren Filteranfragen (4a) zu erzeugen;
einer Maskeneinrichtung (6), welche dazu ausgelegt ist,
eine Filtermaske (40) auf der Basis der Filtermarkierungen (11, 12) zu erzeugen; und
einer Filtereinrichtung (7), welche dazu ausgelegt ist, einen von dem Netzwerkknoten (10) empfangenen, mit dem Codierungsschema codierten Datenstrom mithilfe der Filtermaske (40) zu filtern und den gefilterten codierten Datenstrom an den mindestens einen weiteren Netzwerkknoten (101; ...; 108) weiterzuleiten.

6. Vorrichtung (1) nach Anspruch 5, wobei der Datenstrom XML-Format aufweist.

7. Vorrichtung (1) nach Anspruch 6, wobei das Codierungsschema ein binäres XML-Codierungsschema umfasst.

8. Vorrichtung (1) nach Anspruch 7, wobei die Filteranfragen (4a) XPath-Filteranfragen oder XQuery-Filteranfragen aufweisen.

9. Netzwerkknoten (10), mit:
einer Vorrichtung (1) nach einem der Ansprüche 5 bis 8;
einer Empfangsschnittstelle (2a; ...; 2m), welche dazu ausgelegt ist, einen mit dem Codierungsschema codierten Datenstrom zu empfangen und durch die Filtereinrichtung (7) zu leiten; und
einer Sendeschnittstelle (3a; ...; 3k), welche dazu ausgelegt ist, den von der Filtereinrichtung (7) gefilterten codierten Datenstrom an mindestens einen weiteren Netzwerkknoten (101; ...; 108) weiterzuleiten.

10. Netzwerkknoten (10) nach Anspruch 9, wobei der Netzwerkknoten (10) ein eingebettetes System aufweist, und wobei die Vorrichtung (1) in einem Mikroprozessor des eingebetteten Systems ausgestaltet ist.
